# EUROPEAN PATENT APPLICATION

(11) **EP 4 653 982 A1**
(43) Date of publication of application: **26.11.2025**
(21) Application number: 25151777.7
(22) Date of filing: 14.01.2025
(51) Int. Cl.: G06F 1/16, G06F 3/04886, G06F 3/0481

(54) **DISPLAY CONTROL METHOD, ELECTRONIC DEVICE AND STORAGE MEDIUM**

(30) Priority: 24.05.2024 CN 202410658588
(71) Applicant: Beijing Xiaomi Mobile Software Co., Ltd., Beijing 100085 (CN)
(72) Inventor: CHENG, Lu, Beijing, 100085 (CN); WU, Jingjing, Beijing, 100085 (CN); ZHANG, Ruxin, Beijing, 100085 (CN); LU, Dan, Beijing, 100085 (CN); TANG, Han, Beijing, 100085 (CN); GAO, Jin, Beijing, 100085 (CN); LIANG, Zhe, Beijing, 100085 (CN); ZHANG, Leilei, Beijing, 100085 (CN)
(74) Representative: Dehns Germany Partnerschaft mbB

(57) **Abstract**

A display control method, an electronic device and a storage medium are provided. The method includes: obtaining (101) a content to be displayed in an external screen of an electronic device in a folded state, in which a display area of the external screen is divided into a first display area and a second display area; and displaying (102) the content to be displayed through the first display area and the second display area, in which a display window of the first display area is larger than a display window of the second display area, and a camera is arranged in the second display area.

## Description

### FIELD

The present invention relates to a field of display control of electronic devices, and more particularly to a display control method, an electronic device and a storage medium.

### BACKGROUND

In recent years, with the development of terminal technology, an electronic device with a foldable display screen has gradually entered people's lives, such as a mobile phone or a tablet computer with a foldable display screen. When the electronic device is in a folded state, information is displayed through an external screen. However, a screen shape of the external screen is irregular, and a screen size of the external screen is small, so that a display effect of the external screen is poor.

### SUMMARY

The present invention aims at solving one of the technical problems in the related art at least to some extent.

Therefore, the present invention provides a display control method, a display control apparatus, an electronic device and a storage medium, so as to improve the display effect of an external screen.

Embodiments of a first aspect of the present invention provide a display control method, which includes: obtaining a content to be displayed in an external screen of an electronic device in a folded state, in which a display area of the external screen is divided into a first display area and a second display area; and displaying the content to be displayed through the first display area and the second display area, wherein a display window of the first display area is larger than a display window of the second display area, and a camera is arranged in the second display area.

Embodiments of a second aspect of the present invention provide a display control apparatus, which includes: an obtaining module configured to obtain a content to be displayed in an external screen of an electronic device in a folded state, in which a display area of the external screen is divided into a first display area and a second display area; and a display module configured to display the content to be displayed through the first display area and the second display area, wherein a display window of the first display area is larger than a display window of the second display area, and a camera is arranged in the second display area.

Embodiments of a third aspect of the present invention provide an electronic device, which includes a memory, a processor and a computer program stored in the memory and executable on the processor, and when the processor executes the program, the method described in the first aspect is realized.

Embodiments of a fourth aspect of the present invention provide a non-transitory computer-readable storage medium, on which a computer program is stored, and the computer program, when executed by a processor, realizes the method as described in the first aspect.

Embodiments of a fifth aspect of the present invention provides a computer program product, on which a computer program is stored, which, when executed by a processor, realizes the method as described in the first aspect.

In the display control method, the display control apparatus, the electronic device and the storage medium according to the present invention, the content to be displayed in the external screen of the electronic device in the folded state is obtained, the display area of the external screen is divided into the first display area and the second display area, and the content to be displayed is displayed through the first display area and the second display area. The display window of the first display area is larger than the display window of the second display area, and the camera is arranged in the second display area. By dividing the display area of the external screen into the first display area and the second display area, the first display area and the second display area are combined to display the content to be displayed, so that the utilization rate of the external screen is increased and the display effect of the external screen is improved.

Additional aspects and advantages of the present invention will be set forth in part in the following description, and in part will be obvious from the following description, or may be learned by practice of the present invention.

### BRIEF DESCRIPTION OF THE DRAWINGS

The above and/or additional aspects and advantages of the present invention will be apparent and easily understood from the following description of embodiments with reference to the accompanying drawings.
Fig. 1 is a flow chart of a display control method according to an embodiment of the present invention.
Fig. 2 is a flow chart of another display control method according to an embodiment of the present invention.
Fig. 3 is a schematic diagram of division of a display area of an external screen according to an embodiment of the present invention.
Fig. 4 is a schematic display diagram of an external screen according to an embodiment of the present invention.
Fig. 5 is a schematic display diagram of another external screen according to an embodiment of the present invention.
Fig. 6A is a schematic display diagram of another external screen according to an embodiment of the present invention.
Fig. 6B is a schematic display diagram of another external screen according to an embodiment of the present invention.
Fig. 7 is a flow chart of another display control method according to an embodiment of the present invention.
Fig. 8A is a schematic display diagram of another external screen according to an embodiment of the present invention.
Fig. 8B is a schematic display diagram of another external screen according to the embodiment of the present invention.
Fig. 9 is a schematic display diagram of another external screen according to an embodiment of the present invention.
Fig. 10 is a schematic display diagram of another external screen according to the embodiment of the present invention.
Fig. 11 is a schematic diagram of a display control apparatus according to an embodiment of the present invention.
Fig. 12 is a schematic diagram of an electronic device according to an embodiment of the present invention.

### DETAILED DESCRIPTION

Hereinafter, embodiments of the present invention will be described in detail, examples of which are illustrated in the accompanying drawings, in which the same or similar reference numerals indicate the same or similar elements or elements having the same or similar functions throughout. The embodiments described below with reference to the accompanying drawings are exemplary and are intended to explain the present invention, but not to be construed as limitations of the present invention.

A display control method, a display control apparatus, an electronic device and a storage medium of embodiments of the present invention are described below with reference to the accompanying drawings.

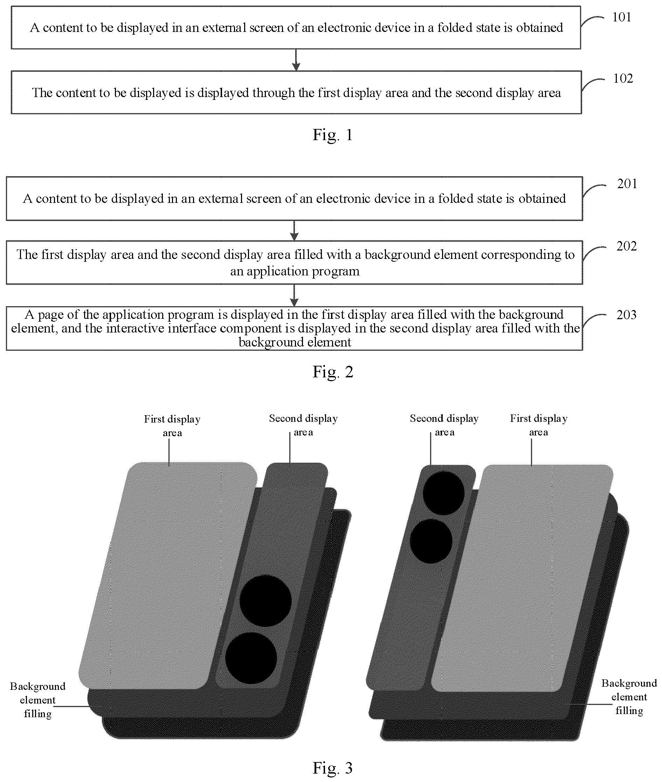

Fig. 1 is a flow chart of a display control method according to an embodiment of the present invention.

The embodiments of the present invention illustrate the display control method by taking an example that the display control method is configured in a display control apparatus, and the display control apparatus may be applied to any electronic device, so that the electronic device may perform a display control function.

The electronic device may be any device with a computing power, such as a personal computer, a mobile terminal, a server (or a cloud), etc. The mobile terminal may be, for example, a vehicle-mounted device, a mobile phone, a tablet computer, a personal digital assistant and other hardware devices with various operating systems, touch screens and/or display screens.

As shown in Fig. 1, the method may include the following steps.

In step 101, a content to be displayed in an external screen of an electronic device in a folded state is obtained.

A display area of the external screen is divided into a first display area and a second display area.

In the embodiments of the present invention, the foldable electronic device includes the external screen and a foldable inner screen. In the folded state, information may be displayed through the external screen (an outer screen) of the electronic device. Since a camera is usually arranged in the external screen, a displayable area of the external screen is irregular in shape, and a conventional display mode will lead to crowded display of page elements when an application program is displayed. In order to improve the display effect, the display area of the external screen is partitioned into the first display area and the second display area based on a shape of the external screen. At least one first display area is arranged, and at least one second display area is arranged.

In the embodiments of the present invention, in a scenario, the content to be displayed includes an application program and an interactive interface component, and the interactive interface component includes an interactive control of the application program to be displayed or includes a target widget.

In another scenario, the content to be displayed includes an application program.

How to determine the application program to be displayed is illustrated by the following scenarios.

In a scenario implemented in the present invention, when the external screen of the electronic device is switched from a locked screen state to an unlocked screen state, the application program to be displayed in the external screen is determined, such as a desktop application program or an application program displayed before a screen is locked.

In a second scenario, a user clicks an icon of an application program on a desktop, and the clicked application program is the application program to be displayed.

In a third scenario, an application program is stored in a status bar and is clicked, and this application program is the application program to be displayed.

In a fourth scenario, in response to that the inner screen of the electronic device switches from an unfolded state to the folded state, for example, a folding operation performed by the user is detected, or a folding angle of the inner screen of the electronic device is detected to be smaller than a threshold angle, the content to be displayed in the external screen of the electronic device is determined according to a content displayed in the inner screen of the electronic device. As an implementation, the content displayed in the inner screen serves as the content displayed in the external screen. As another implementation, since a display size of the inner screen is larger and a display size of the external screen is smaller, the content displayed in the inner screen may be partially deleted to display the main content or the key content in the external screen. When the electronic device is switched from the unfolded state to the folded state, the application program displayed by the user in the inner screen may continue to be displayed through the external screen, thus realizing non-inductive switching and improving the display effect.

In step 102, the content to be displayed is displayed through the first display area and the second display area.

A display window of the first display area is larger than a display window of the second display area, and a camera is arranged in the second display area. A size of the display window of the first display area is larger than a size of the display window of the second display area, so that the first display area is a complete area, for example, being rectangular in shape, and having a ratio close to 16:9, and thus a better display effect may be obtained when displaying application programs. At least one camera may be arranged in the second display area, and a displayable area in the second display area is partially occupied by the camera, so that the display size of the second display area is smaller, and the second display area is suitable for displaying some lightweight content with less information, or the second display area and the first display area are combined for display, so as to improve the display effect and enhancing the screen utilization rate of the external screen.

In the embodiments of the present invention, in a case that the content to be displayed is different, and a display mode in which the first display area and the second display area display the content is different, which will be described in detail in subsequent embodiments.

In the display control method of the embodiments of the application, the content to be displayed in the external screen of the electronic device in the folded state is obtained, the display area of the external screen is divided into the first display area and the second display area, and the content to be displayed is displayed through the first display area and the second display area. The display window of the first display area is larger than the display window of the second display area, and the camera is arranged in the second display area, By dividing the display area of the external screen into the first display area and the second display area, the first display area and the second display area are combined to display the content to be displayed, thus enhancing the utilization rate of the external screen and improving the display effect of the external screen.

Fig. 2 is a flow chart of another display control method according to an embodiment of the present invention. As shown in Fig. 2, the method includes the following steps.

In step 201, a content to be displayed in an external screen of an electronic device in a folded state is obtained.

The content to be displayed includes an application program and an interactive interface component.

In the embodiments of the present invention, the interactive interface component is an interactive control or widget, the interactive interface component is located at a side of the camera in the second display area, and the camera and the interactive interface component are arranged along a length direction of the electronic device.

Step 201 may refer to the explanation in the previous embodiment, and the principle is the same, so they will not be repeated here.

As an example, Fig. 3 is a schematic diagram of the division of the external screen display area according to the embodiment of the present invention. As shown in Fig. 3, the external screen area is divided into the first display area and the second display area, and the camera is arranged in the second display area. The filling colors in Fig. 3 are only schematic for identifying different display areas, and do not constitute a limitation to the present invention.

In step 202, the first display area and the second display area filled with a background element corresponding to an application program.

The background element corresponding to an application program to be displayed may be a background color or a background picture corresponding to the application program, and the first display area and the second display area are filled with the background element corresponding to the application program, that is, the whole display area of the external screen is filled, so that the first display area and the second display area look as a whole, and thus the visual effect can be improved when the application program is displayed.

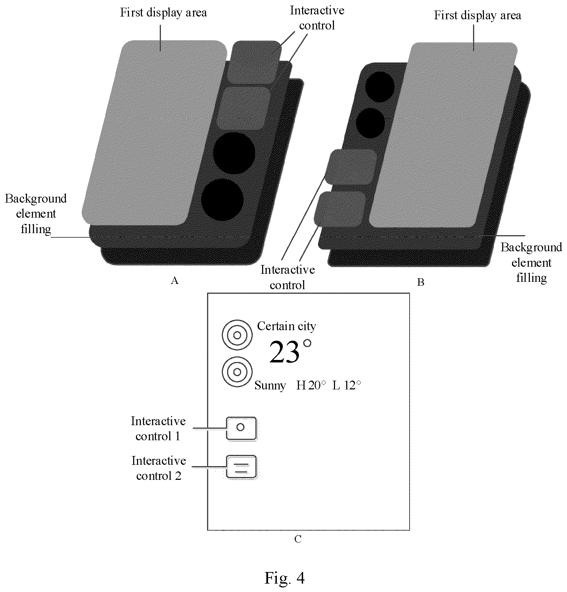

As an example, Fig. 4 is a schematic display diagram of the external screen according to an embodiment of the present invention. As shown in Fig. 4, images A and B show schematic diagrams of the display area of the external screen of the electronic device in two directions. Although the external screen is divided into two independent display areas, the interactive control of the application program is displayed in the second display area. As an implementation, according to a size of the interactive control, as shown in Fig. 4, the interactive control may be displayed on a side of the camera arranged in the second display area, and the interactive control is used to control the application program. When the application program is displayed, the first display area and the second display area are filled with the same background element, so that the background colors displayed in the first display area and the second display area are the same, or the first display area and the second display area display one background picture together. The background color or the background picture is selected to be similar or the same as a color of an interface of the application program, which can increase consistency and coordination, thus improving the display effect. Image C in Fig. 4 is a schematic diagram showing a temperature application program, in which the first display area and the second display area are filled with the same vertical grid background picture, so that the whole display area of the external screen has a complete display effect. The first display area displays a page of weather details, and two interactive controls of the weather application program are displayed on a side of the camera in the second display area, namely, interactive control 1 and interactive control 2. Interactive control 1 is used for refreshing the weather details displayed in the first display area, and interactive control 2 is used for carrying out a list switching. It should be noted that the filling colors and backgrounds in Fig. 4 are only schematic, and are used to identify different display areas, and do not constitute limitations to the present application.

In step 203, a page of the application program is displayed in the first display area filled with the background element, and the interactive interface component is displayed in the second display area filled with the background element.

When the application program to be displayed is different, the display mode of the external screen is also different, and the interactive interface component is also different, so as to achieve different display effects, which will be explained for different scenarios in the following.

In a scenario, the application program to be displayed is a first application program, and the first application program needs to interact with the user through an interactive control during use, for example, a calculator, a recorder, a note and a weather forecast. The interactive interface component includes the interactive control. As an example, as shown in image C of Fig. 4, the interactive interface component is the interactive control, the interactive control is located at a side of the camera in the second display area, and the camera and the interactive control are arranged along the length direction of the electronic device, that is, the camera and the interactive control are arranged along a length side of the electronic device, so as to facilitate the user to operate the interactive control when using the external screen, thus improving the convenience and efficiency. When the electronic device displays the application program of the calculator, the first display area displays a main page of the calculator, that is, a calculation page, and the second display area displays two interactive controls, including a control for switching videos and an interactive control for switching exchange rates. When the electronic device displays the application program of the recorder, the first display area displays a main page of recording, that is, a page that displays a recording progress, and the second display area displays two interactive controls, including an interactive control that controls the pause of recording and an interactive control that controls the stop of recording. When the electronic device displays the application program of the note, the first display area displays a page of details to be done, and the second display area displays one interactive control, i.e. an interactive control for quick entering by voice. When the electronic device displays the application program of the weather, the first display area displays a page of weather details, and the second display area displays two interactive controls, including an interactive control for page refreshing and an interactive control for list switching.

In the embodiments of the application, the second display area is an irregular display area because the camera is arranged therein, and in the related art, the second display area is usually not used for display, which causes the display content to be crowded. In the present invention, the page of the application program is displayed in the first display area, and the interactive control is arranged in the second display area, so that the utilization of the second display area is realized, thus increasing the display area, and improving the display effect.

In a second scenario, the application program is a second application program, and the second application program has less interaction with the user, such as a desktop application program, a navigation application program, etc. In order to improve the utilization rate of the external screen and the efficiency of information acquisition, widgets of a plurality of application programs may be preset, and may be controlled by a system to be displayed in the second display area. The system controls at least one widget to be displayed in the second display area, and the at least one widget may be preset in the inner screen. For example, the user may set the widget according to needs. The widget corresponds to the application program, that is, the widget is a widget of the application program, such as a widget of the application program of weather, a widget of an application program of clocks, a widget of an application program of calendars, a widget of an application program of sports health, a widget of an application program of music playing, and so on.

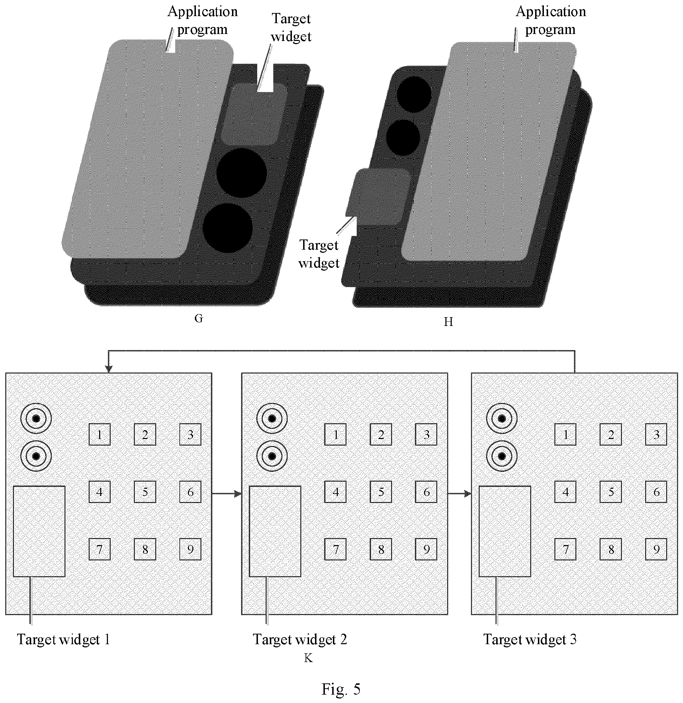

As an example, Fig. 5 is a schematic display diagram of another external screen according to an embodiment of the application. As shown in Fig. 5, the interactive interface component is the widget of the application program, the widget is located at a side of the camera in the second display area, and the camera and the interactive control are arranged along the length direction of the electronic device, that is, the camera and the widget are arranged along the length direction of the electronic device, so that the user may view or operate the widget through the second display area when using the first application program with the external screen, thus improving the convenience and efficiency. As shown in Fig. 5, the first display area of the external screen displays a page of a desktop application program, and the page includes icons of a plurality of application programs, which are identified as 1-9. The second display area displays a target widget of a plurality of widgets, and the plurality of widgets corresponds to a plurality of application programs different from the second application program. That is, the second application program displayed in the first display area is different from the application program corresponding to the widget displayed in the second display area, so as to avoid repeated display. The target widget, that is, a widget to be displayed currently controlled by the system, may be a widget to be displayed selected and determined by the user or a widget to be displayed determined by the system based on a default sorting. The target widgets displayed in Fig. 5 are identified as target widget 1, target widget 2 and target widget 3 in sequence from left to right. For example, target widget 1, target widget 2 and target widget 3 are a clock widget, a weather widget and a calendar widget in sequence. It should be noted that the patterns filled with colors and backgrounds in Fig. 5 are only schematic, which are used to identify different display areas, and do not constitute limitations to the present invention.

In the embodiments of the application, the second display area is an irregular display area because the camera is arranged therein, and in the related art, the second display area is usually not used for display, thus causing the display content to be crowded. In the present invention, the first display area displays the page of the application program, and the widget of the application program is arranged in the second display area, so that the utilization of the second display area is realized, and the display area is increased, thus increasing the display amount of information and improving the efficiency of information acquisition.

In the display control method of the embodiments of the present invention, the display area of the external screen is divided into the first display area and the second display area, the first display area and the second display area are combined to display the application program to be displayed, and the interactive interface component is displayed in the second display area, so that the display effect of the external screen is improved, and the utilization rate of the external screen and the efficiency of information acquisition are improved.

The embodiments of the present invention also include a scenario where the application program is displayed in full screen on the external screen. As an example, step 102 further includes the following implementation.

In response to that the content to be displayed includes a third application program, the first display area and the second display area displays a page of the third application program together. The third application program refers to an application program that needs more display areas for the page display content to have a better display effect, such as a music application program, a navigation application program, etc.

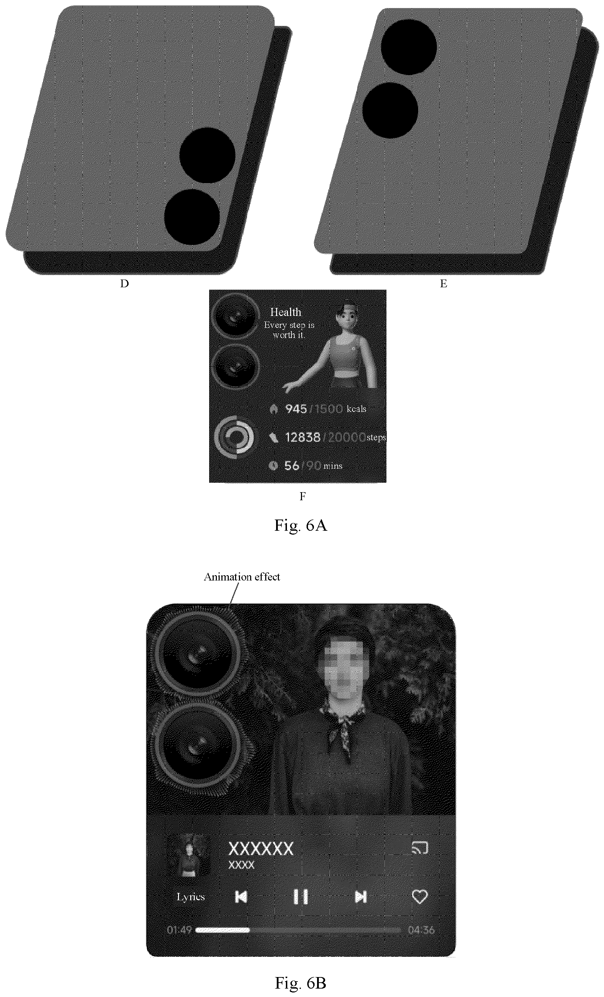

As an example, Fig. 6A is a schematic display diagram of another external screen according to an embodiment of the present invention. As shown in Fig. 6A, the third application program is displayed in full screen, and images D and E in Fig. 6A are schematic diagrams of the electronic device in different vertical screen directions in this scenario. Image F indicates that the page is displayed in full screen when the third application program is a sports application program, and sports-related parameters, cartoon images and motivational words will be displayed in the image, such as calories, steps and energy consumption, etc., that is, a better visual experience may be obtained through display of the first display area and the second display area together. When the third application program is a navigation application program, the page of the navigation application program is also displayed in full screen, and the navigation content is displayed in full screen, so as to obtain the maximum visual field. A kilometer number and an exit control are displayed below the camera, and in order to obtain a larger visual field, the kilometer number, the exit control and the camera are arranged along the long side of the electronic device. The corresponding display is performed according to different application programs and display scenarios, so that the display requirements of different scenarios are met, and the display effect and the information acquisition efficiency are improved. It should be noted that the filling colors and background images in Fig. 6A are only schematic, which are used to identify different display areas, and do not constitute limitations to the present invention.

Further, in a scenario of full-screen display, as an implementation, it is queried whether the third application program has a corresponding animation effect, and in response to that the third application program has the corresponding animation effect, the page of the third application program is displayed in the first display area and the second display area together, and the animation effect is displayed in an overlapping manner in a display area adjacent to the camera in the second display area. For the set third application program, the animation effect is added around the camera to improve the display effect. As an example, as shown in Fig. 6B, taking the third application program serving as a music application program with an animation effect as an example, a playing progress bar is arranged along a width direction of the external screen of the electronic device, and a width of the playing progress bar is the same as a width of the inner screen, so that the operation and the display effect are better. The animation effect in Fig. 6B is realized by dynamically displaying light beams with different lengths around the camera, so that the light beams may be displayed with different lengths along with the fluctuation of music melody and the beat of rhythm, so as to show the dynamics of music and enhance the visual effect.

It should be noted that the application program, that needs to be adapted to display the animation effect, further includes a flashlight application program, and a light effect may be displayed through animation to improve the display effect.

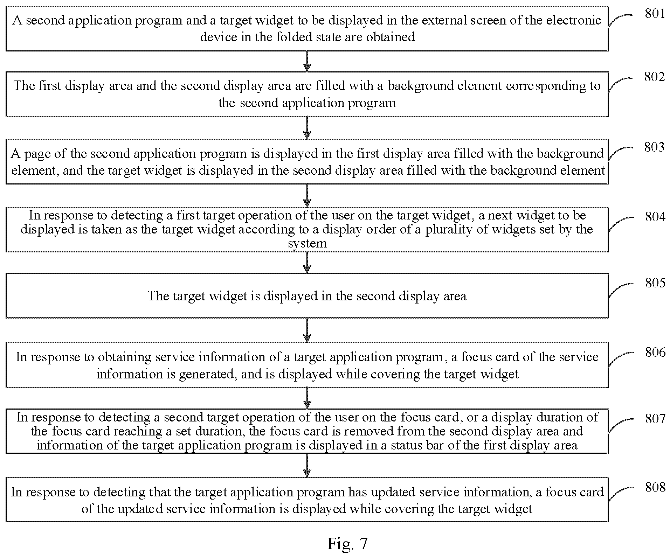

The embodiments of the present invention provide another display control method, and Fig. 7 is a flow chart of another display control method according to an embodiment of the present invention. As shown in Fig. 7, the display control method includes the following steps.

In step 801, a second application program and a target widget to be displayed in the external screen of the electronic device in the folded state are obtained.

In step 802, the first display area and the second display area are filled with a background element corresponding to the second application program.

In step 803, a page of the second application program is displayed in the first display area filled with the background element, and the target widget is displayed in the second display area filled with the background element.

Steps 801 to 803 may refer to the explanation in the previous embodiment, and the principle is the same, so that they are not repeated here.

In step 804, in response to detecting a first target operation of the user on the target widget, a next widget to be displayed is taken as the target widget according to a display order of a plurality of widgets set by the system.

In step 805, the target widget is displayed in the second display area.

In the embodiments of the application, the first target operation is used to switch the displayed target widget, and the user may replace the widget displayed in the second display area, so that the user may quickly obtain various kinds of information. As an implementation, the first target operation of the user on the target widget may be detected, and the first target operation may be an up-and-down sliding operation, or a left-and-right sliding operation, or an arbitrarily set operation such as a long-press click operation, or an operation of shaking a mobile phone. When the first target operation is detected, the displayed target widget is switched. As shown in Fig. 5, there are three kinds of target widgets that may be displayed in the second display area. The first target operation is a slide-up operation. The displayed target widget is switched from target widget 1 to target widget 2. The slide-up operation is performed on target widget 2, and target widget 2 is switched to target widget 3. The slide-up operation is performed on target widget 3, and target widget 3 is switched to target widget 1 again. Through the slide-up operation, different target widgets may be switched and displayed, thus satisfying the user's various requirements of information acquisition. In practical applications, the second application program is, for example, a navigation application program, so that temperature information or calendar information may be further obtained through the displayed target widget while the user views the navigation page, which meets the requirements of information acquisition in various scenarios and increases the utilization rate of the external screen.

As another implementation to realize the switching display mode of widgets, a display duration may also be set for each widget of a plurality of widgets. The display duration of each widget may be the same or different. The display duration of each widget may be set according to a usage frequency of the widget. The more the usage frequency, the longer the display duration, and vice versa. Furthermore, according to the display sequence and the display duration of each widget, the widgets are displayed circularly in sequence, thus realizing the automation of display.

In step 806, in response to obtaining service information of a target application program, a focus card of the service information is generated, and is displayed while covering the target widget.

A size of the focus card is greater than or equal to a size of the target widget.

The target application program is an application program configured to generate the focus card, for example, an application program that pays high attention to the progress, such as a taxi application program and a takeaway application program, so that the pushed message needs to generate the focus card, which needs to be focused on, and avoided from being omitted, and the convenience of information acquisition is increased. When the target application program has service information, it will push the message to the user. In order to avoid message omission, it will generate the focus card from the message content, and display the focus card in the second display area. The display size of the focus card is greater than or equal to the display size of the target widget, so that the focus card can cover the target widget for display, that is, the display priority of the focus card is greater than the display priority of the target widget. In a case that the focus card covers the target widget for display, in response to the set user operation (not limited herein), the display interface of the target application program corresponding to the focus card is enlarged and displayed in the first display area, and the target widget continues to be displayed in the second display area.

In a scenario, in a case that a plurality of target application programs have service information to be displayed, as an implementation, the focus cards of the service information of the respective target application programs may be displayed in the second display area according to the set display priority of each target application program, so as to avoid the user from missing important information. For example, when the user is ready to go home, the user orders a takeaway, then the user opens the taxi software to take a taxi, and the priority of the taxi software is higher than the priority of the takeaway software, so that the service information pushed by the taxi software is displayed first. As another implementation, according to the time information of the service information of each target application program, the recently obtained service information of the target application program is displayed. For example, for target application program A and target application program B, the latest service information of target application program A is displayed while overlaying the historical service information of target application program B, so as to realize the display of the latest service information.

In step 807, in response to detecting a second target operation of the user on the focus card, or a display duration of the focus card reaching a set duration, the focus card is removed from the second display area and information of the target application program is displayed in a status bar of the first display area.

In an implementation of the embodiments of the present invention, the second target operation is used to remove the focus card from the second display area. For the focus card, the focus card may be removed from the second display area when the user performs the second target operation, that is, after viewing the message displayed by the focus card, the user removes the focus card through the second target operation, and the target widget continues to be displayed. It should be noted that after the focus card is removed from the second display area, the information of the target application program is displayed via a thumbnail in the status bar of the first display area, including the icon of the target application program and the main reminding information, such as the vehicle model, the remaining mileage, etc. Clicking on the target application program in the status bar will enlarge and display the target application program in the first display area, then corresponding operations are performed on the enlarged and displayed target application program, such as the long-press click operation, and the focus card of the target application program is redisplayed in the second display area.

In another implementation of the embodiments of the application, the focus card may be set with the display duration, and after the display duration is reached, the focus card disappears. The display duration may be permanent, i.e., the focus card of the service information of the target application program may be displayed permanently, that is, the focus card always covers the target widget for display. In a case that the display duration is not permanent, and it is 5 seconds, after being displayed for 5 seconds, the focus card is removed and the target widget continues to be displayed, so as to realize the display control of service information.

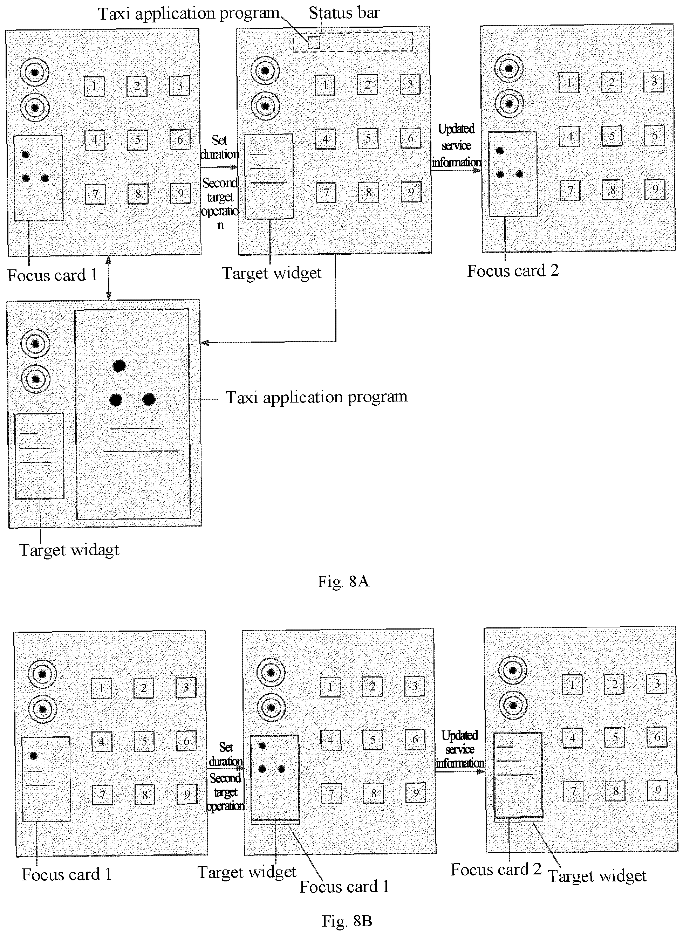

As an example, as shown in Fig. 8A, a desktop application program is displayed in the first display area in Fig. 8A, icons of application programs numbered 1-9 are displayed in the page of the desktop application program, and the target application program is a taxi application program. In the second display area, focus card 1 generated from the service information of the taxi application program covers the widget of the clock for display. In Fig. 8A, the display type of focus card 1 of the taxi application program is non-permanent. The set duration of focus card 1 is 5 seconds, so that focus card 1 of the taxi application program disappears after 5 seconds, the target widget of the clock continues to be displayed in the second display area, and the icon and information of the taxi application program are displayed in the status bar of the first display area.

It should be noted that the filling colors and filling manners in Fig. 8A are only schematic, which are used to identify different display areas and display modes, and do not constitute limitations to the present invention.

In step 808, in response to detecting that the target application program has updated service information, a focus card of the updated service information is displayed while covering the target widget.

Furthermore, in a case that the target application program has further updated service information, the focus card of the further updated service information is generated again, and covers the target widget again for display in the second display area.

As shown in Fig. 8A, in a case that the taxi application program has the updated service information, focus card 2 of the taxi software reappears and covers the target widget for display in the second display area, thus avoiding the omission of important information, and also realizing the use of the target widget and the information acquisition from the target widget, which increases the amount of obtained information. When the focus card is displayed in the second display area, in response to detecting that the user performs a volume adjustment operation, a volume bar is displayed above the focus card, and the size of the volume bar is smaller than or equal to the size of the focus card.

As an implementation, the focus card may coexist with the conventional suspension notice. When a notification bar is displayed in response to a slide-down operation of the user, the focus card is removed from the second display area, and the target widget is removed from the second display area. The focus card is displayed as a first message of the notification bar in the second display area, thus increasing the display mode of key information.

In the display control method of the embodiments of the application, the application program may actively push the focus card of the service information to the user, and the focus card automatically disappears after the service ends. When using the external screen of the electronic device, there is no need to worry about missing important information or key information, and also there is no need to worry about the content of the application program being blocked, so that the external screen of the folded electronic device is effectively utilized, thus improving the usability and accessibility of the external screen greatly. In most scenarios, the user may complete the operation on the external screen without opening the electronic device, such as a foldable phone, thus increasing the convenience and maximizing the screen utilization rate.

Based on the above embodiment, in the above steps 807 and 808, the focus card is removed and the display of the focus card is controlled. As another implementation, the focus card and the target widget displayed in the second display area are displayed in a stacked manner, in response to detecting the second target operation of the user on the focus card or the display duration of the focus card reaches the set duration. As an example, Fig. 8B shows a schematic diagram of the focus card and the target widget displayed in the stacked manner. In response to detecting the second target operation of the user on focus card 1, or the display duration of focus card 1 reaches the set duration, a layer of the target widget is displayed above a layer of focus card 1. Furthermore, in a case that the target application program has new service information, the generated focus card 2 is moved to be above the target widget for display, so that the user may check the new message in time.

The stacked manner is only an illustrative example, and it may be any stacked manner, such as up-and-down stacking, left-and-right stacking, or multiple stacking, which does not constitute a limitation to the embodiments of the present invention.

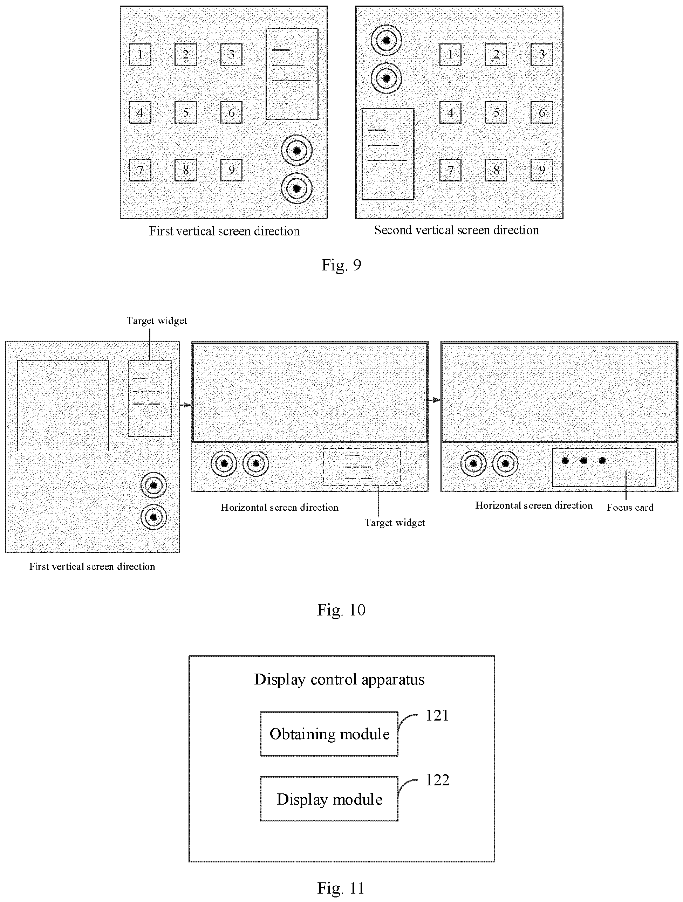

Based on the above embodiments, when the electronic device in the folded state is used, it is usually in s vertical screen state. In the vertical screen state, the directions of the electronic device are also different. In order to distinguish the different directions, they are called a first vertical screen direction and a second vertical screen direction. In order to increase the use convenience for the user, in the vertical screen state, the content displayed in the external screen is adjusted adaptively, that is, the content displayed in the first display area and the second display area are adjusted to improve the use effect, regardless of whether the electronic device is in the first vertical screen direction or the second vertical screen direction. In an implementation of the embodiments of the present invention, in response to determining that the electronic device rotates from the first vertical screen direction to the second vertical screen direction, the interactive interface component displayed in the first display area and the page of the application program displayed in the second display area are adjusted to match with the second vertical screen direction, in which the adjustment includes layout rearrangement, resource adaptation, dynamic view adjustment and the like. The first vertical screen direction and the second vertical screen direction are opposite. Thus, the adjusted interactive interface component is displayed in the first display area, and the adjusted page of the application program is displayed in the second display area, so that after the orientation of the electronic device is adjusted, an UI interface of the content to be displayed is adjusted, including layout rearrangement, resource adaptation, dynamic view adjustment and the like, so as to adapt to the electronic device with the adjusted orientation. As an example, as shown in Fig. 9, the first vertical screen direction and the second vertical screen direction of the electronic device are shown, which indicate the different orientations of the electronic device. As shown in Fig. 9, taking a position of a fixed camera on the electronic device as an example, in the first vertical screen direction, the camera is at a bottom of the electronic device, and in the second vertical screen direction, the camera is at a top of the electronic device. Therefore, the first vertical screen direction and the second vertical screen direction may be switched by rotating 180 degrees, that is, in a case that the electronic device is in the first vertical screen direction, the electronic device will be in the second vertical screen direction after rotating 180 degrees; and in a case that the electronic device is in the second vertical screen direction, the electronic device will be in the first vertical screen direction after rotating 180 degrees. Fig. 9 shows the display of the external screen in the first vertical screen direction and the second vertical screen direction. When the electronic device in the folded state switches from the first vertical screen state to the second vertical screen state, and the content displayed in the first display area and the second display area will be adjusted adaptively, as shown in Fig. 9.

It should be noted that the content shown in Fig. 9 may be a complete page of the application program, or the page of the application program and the interactive interface component. The filling colors and backgrounds in Fig. 9 are only schematic, which are used to identify different display areas, and do not constitute limitations to the present invention.

Based on the above embodiments, when the electronic device in the folded state is used, it is usually in the vertical screen state. In order to increase the convenience for the user, the user may also rotate the electronic device to a horizontal screen state for use. When the electronic device switches from the vertical screen state to the horizontal screen state, the content displayed in the external screen will be adjusted to adapt to the display of the horizontal screen. When the electronic device switches to the horizontal screen for display, i.e., when the user usually switches to the horizontal screen for watching videos, watching videos is usually considered as immersive behavior, and thus the display content of the target widget is generally not concerned. Therefore, as shown in Fig. 10, when a third target operation of the user is detected, for example, a sliding operation in a set direction, the target widget is deleted from the second display area. As another implementation, the target widget is converted into a display mode matching with the horizontal screen state and displayed in the second display area, so as to increase the amount of information that may be obtained. Further, in a case that the user does not want the target widget to be displayed in the second display area, the target widget displayed in the horizontal screen may also be removed through a set operation. It should be noted that when the service information of the target application program appears, the focus card of the service information will be displayed in the second display area. For the display mode of the focus card in the horizontal screen state, reference may be made to the explanation in the previous embodiments, and the principle is the same, which will not be repeated here. The conventional notification message will appear in the first display area and coexist with the message of the focus card.

It should be noted that the filling colors, the filling manners, the background pictures, etc. in all the drawings in the embodiments of the present invention are only schematic, which are used to identify different display areas, and do not constitute limitations to the present invention.

In order to realize the above embodiments, the embodiments of the present invention also provide a display control apparatus.

Fig. 11 is a schematic diagram of a display control apparatus according to an embodiment of the present invention.

As shown in Fig. 11, the apparatus may include: an obtaining module 121 configured to obtain a content to be displayed in an external screen of an electronic device in a folded state, in which a display area of the external screen is divided into a first display area and a second display area; and a display module 122 configured to display the content to be displayed through the first display area and the second display area, in which a display window of the first display area is larger than a display window of the second display area, and a camera is arranged in the second display area.

Further, in an implementation of the embodiments of the present invention, the content to be displayed includes an application program and an interactive interface component, and the display module 122 is configured to: fill the first display area and the second display area with a background element corresponding to the application program; and display a page of the application program in the first display area filled with the background element, and display the interactive interface component in the second display area filled with the background element.

In an implementation of the embodiments of the present invention, the interactive interface component is located at a side of the camera in the second display area, and the camera and the interactive interface component are arranged along a length direction of the electronic device.

In an implementation of the embodiments of the present invention, the application program is a first application program, and the interactive interface component is an interactive control of the first application program.

In an implementation of the embodiments of the present invention, the application program is a second application program, and the interactive interface component is a target widget of a plurality of widgets set by a system; and the plurality of widgets corresponds to a plurality of application programs different from the second application program.

In an implementation of the embodiments of the present invention, the apparatus further includes a determination module configured to take a next widget to be displayed as the target widget according to a display order of the plurality of widgets set by the system, in response to detecting a first target operation of a user on the target widget; and the display module 122 is further configured to display the target widget in the second display area.

In an implementation of the embodiments of the present invention, the apparatus further includes a generation module. The generating module is configured to, in response to obtaining service information of a target application program, generate a focus card of the service information.

The display module 122 is further configured to display the focus card while covering the target widget, and a size of the focus card is greater than or equal to a size of the target widget.

In an implementation of the embodiments of the present invention, the apparatus further includes a removal module. The removal module is configured to remove the focus card from the second display area and display information of the target application program in a status bar of the first display area, in response to detecting a second target operation of the user on the focus card, or that a display duration of the focus card reaches a set duration. The display module 122 is further configured to, in response to detecting that the target application program has updated service information, display a focus card of the updated service information while covering the target widget with.

In an implementation of the embodiments of the present invention, the display module 122 is configured to: in response to that the content to be displayed includes a third application program, display a page of the third application program in the first display area and the second display area together.

In an implementation of the embodiments of the present invention, the display module 122 is further configured to: query whether the third application program has a corresponding animation effect; and in response to that the third application program has the corresponding animation effect, display the page of the third application program in the first display area and the second display area together, and display the animation effect in an overlapping manner in a display area adjacent to the camera in the second display area.

In an implementation of the embodiments of the present invention, the electronic device is in a first vertical screen direction, and the apparatus further includes a modulation module. The modulation module is configured to, in response to determining that the electronic device rotates from the first vertical screen direction to a second vertical screen direction, adjust the interactive interface components displayed in the first display area and the page of the application program displayed in the second display area to match with the second vertical screen direction, in which the first vertical screen direction and the second vertical screen direction are opposite. The display module 122 is further configured to display the adjusted interactive interface component through the first display area, and display the adjusted page of the application program through the second display area.

In an implementation of the embodiments of the present invention, the electronic device is in the first vertical screen direction, and the removal module is further configured to: monitor a third target operation on the target widget in response to that the electronic device rotates from the first vertical screen direction to a horizontal screen state; and delete the target widget from the second display area in response to monitoring the third target operation.

In an implementation of the embodiments of the present invention, the apparatus further includes a switching module configured to determine the content to be displayed in the external screen according to a content displayed in an inner screen of the electronic device, in response to detecting that the inner screen of the electronic device is switched from an unfolded state to the folded state.

It should be noted that the above explanation of the method embodiments is also applicable to the apparatus of the embodiments, and will not be repeated here.

In the display control apparatus of the embodiments of the present invention, the content to be displayed in the external screen of the electronic device in the folded state is obtained, the display area of the external screen is divided into the first display area and the second display area, and the content to be displayed is displayed through the first display area and the second display area. The display window of the first display area is larger than the display window of the second display area, and the camera is arranged in the second display area. By dividing the display area of the external screen into the first display area and the second display area, the first display area and the second display area are combined to display the content to be displayed, so that the utilization rate of the external screen is enhanced and the display effect of the external screen is improved.

In order to realize the above embodiments, the present disclose also provides an electronic device, which includes a memory, a processor and a computer program stored in the memory and executable on the processor. When the processor executes the program, the method described in the above method embodiments is realized.

In order to realize the above embodiments, the present invention also provides a non-transitory computer-readable storage medium, on which a computer program is stored, which, when executed by a processor, realizes the method described in the above method embodiments.

In order to realize the above embodiments, the present invention also provides a computer program product, on which a computer program is stored, and when the computer program is executed by a processor, the method described in the above method embodiments is realized.

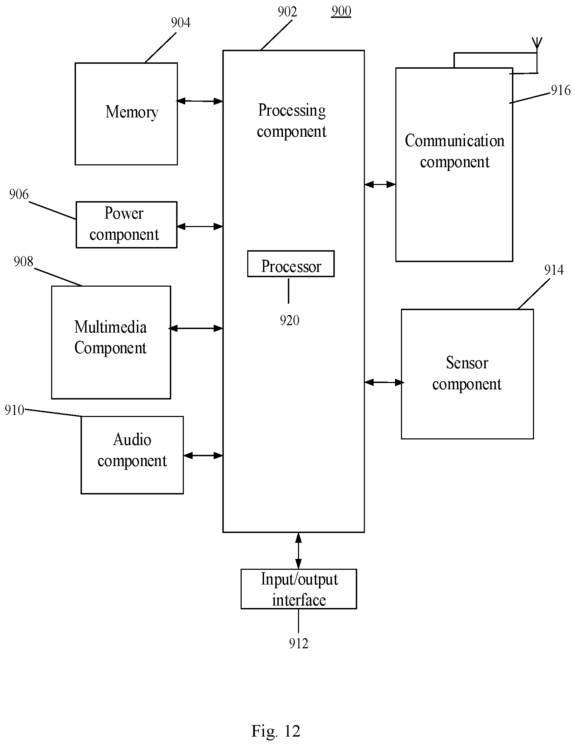

Fig. 12 is a schematic diagram of an electronic device according to an embodiment of the present invention. For example, the electronic device may be a mobile phone, a computer, a digital broadcasting terminal, a messaging device, a game console, a tablet device, a medical device, a fitness device, a personal digital assistant and the like.

Referring to Fig. 12, an electronic device 900 may include one or more of the following components: a processing component 902, a memory 904, a power component 906, a multimedia component 908, an audio component 910, an input/output (I/ O) interface 912, a sensor component 914, and a communication component 916.

The processing component 902 generally controls the overall operation of the electronic device 900, such as operations associated with display, telephone call, data communication, camera operations and recording operations. The processing component 902 may include one or more processors 920 to execute instructions to complete all or part of the steps of the methods described above. In addition, the processing component 902 may include one or more modules to facilitate the interaction between the processing component 902 and other components. For example, the processing component 902 may include a multimedia module to facilitate interaction between the multimedia component 908 and the processing component 902.

The memory 904 is configured to store various types of data to support operations in the electronic device 900. Examples of these data include instructions for any application or method operating on the electronic device 900, contact data, phone book data, messages, pictures, videos, and the like. The memory 904 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 906 provides power to various components of the electronic device 900. The power component 906 may include a power management system, one or more power sources, and other components associated with generating, managing and distributing power for the electronic device 900.

The multimedia component 908 includes a screen that provides an output interface between the electronic device 900 and the user. In some embodiments, the screen may include a liquid crystal display (LCD) and a touch panel (TP). If the screen includes a touch panel, the screen may be implemented as a touch screen to receive an input signal from the user. The touch panel includes one or more touch sensors to sense touch, sliding and gestures on the touch panel. The touch sensor may not only sense the boundary of a touch or sliding action, but also detect the duration and pressure related to the touch or sliding operation. In some embodiments, the multimedia component 908 includes a front camera and/or a rear camera. When the electronic device 900 is in an operation mode, such as a shooting mode or a video mode, the front camera and/or the rear camera may receive external multimedia data. Each of the front camera and the rear camera may be a fixed optical lens system or have a focal length and an optical zoom capability.

The audio component 910 is configured to output and/or input audio signals. For example, the audio component 910 includes a microphone (MIC) configured to receive external audio signals when the electronic device 900 is in an operation mode, such as a call mode, a recording mode and a voice recognition mode. The received audio signal may be further stored in the memory 904 or transmitted via the communication component 916. In some embodiments, the audio component 910 further includes a speaker for outputting audio signals.

The I/O interface 912 provides an interface between the processing component 902 and peripheral interface modules, which may be keyboards, clickwheels, buttons, etc. These buttons may include, but are not limited to, a home button, a volume button, a start button and a lock button.

The sensor assembly 914 includes one or more sensors for providing various aspects of the status assessments for the electronic device 900. For example, the sensor component 914 may detect the on/off state of the electronic device 900, the relative positioning of components, such as the display and keypad of the electronic device 900, the position change of the electronic device 900 or a component of the electronic device 900, the presence or absence of user contact with the electronic device 900, the orientation or acceleration/deceleration of the electronic device 900 and the temperature change of the electronic device 900. The sensor assembly 914 may include a proximity sensor configured to detect the presence of a nearby object without any physical contact. The sensor assembly 914 may also include an optical sensor, such as a CMOS or CCD image sensor, for use in imaging applications. In some embodiments, the sensor assembly 914 may further include an acceleration sensor, a gyro sensor, a magnetic sensor, a pressure sensor or a temperature sensor.

The communication component 916 is configured to facilitate wired or wireless communication between the electronic device 900 and other devices. The electronic device 900 may access a wireless network based on communication standards, such as WiFi, 4G or 5G, or a combination thereof. In an exemplary embodiment, the communication component 916 receives a broadcast signal or broadcast related information from an external broadcast management system via a broadcast channel. In an exemplary embodiment, the communication component 916 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an exemplary embodiment, the electronic device 900 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic components, for performing the above methods.

In the exemplary embodiment, there is also provided a non-transitory computer-readable storage medium including instructions, such as the memory 904 including instructions, which may be executed by the processor 920 of the electronic device 900 to complete the above methods. For example, the non-transitory computer-readable storage medium may be a ROM, a random access memory (RAM), a CD-ROM, a magnetic tape, a floppy disk, an optical data storage device, etc.

In the description of this specification, descriptions referring to the terms "an embodiment", "some embodiments", "an example", "a specific example" or "some examples" mean that specific features, structures, materials or characteristics described in connection with these embodiments or examples are included in at least one embodiment or example of the present invention. In this specification, the schematic expressions of the above terms are not necessarily aimed at the same embodiment or example. Moreover, the specific features, structures, materials or characteristics described may be combined in any one or more embodiments or examples in a suitable manner. In addition, those skilled in the art may combine different embodiments or examples and features of different embodiments or examples described in this specification without contradicting each other.

In addition, the terms "first" and "second" are only used for purpose of descriptions, and cannot be understood as indicating or implying relative importance or implicitly indicating the number of indicated technical features. Therefore, a feature defined as "first" or "second" may explicitly or implicitly include at least one such feature. In the description of the present invention, "a plurality of' means at least two, such as two, three, etc., unless otherwise specifically defined.

Any process or method described in the flow chart or otherwise described herein may be understood as representing a module, segment or part of codes that include one or more executable instructions for implementing customized logic functions or steps of the process, and the scope of preferred embodiments of the present invention includes other implementations, in which functions may be performed out of the order shown or discussed, including in a substantially simultaneous manner or in a reverse order according to the functions involved, which should be understood by those skilled in the art to which the embodiments of the present invention belong.

The logic and/or steps represented in the flow chart or otherwise described herein, for example, may be regarded as a sequenced list of executable instructions for realizing logical functions, and may be embodied in any computer-readable medium for use by or in combination with an instruction execution system, apparatus or device (such as a computer-based system, a system including a processor or other systems that may take instructions from the instruction execution system, apparatus or device, and execute the instructions). In terms of this specification, the "computer-readable medium" may be any device that may contain, store, communicate, propagate or transmit a program for use by or in connection with the instruction execution system, apparatus or device. More specific examples (non-exhaustive list) of computer-readable media include: an electrical connection part (electronic device) with one or more wires, a portable computer disk box (magnetic device), a random access memory (RAM), a read-only memory (ROM), an erasable editable read-only memory (EPROM or flash memory), an optical fiber device, and a portable CD-ROM. In addition, the computer-readable medium may even be paper or other suitable medium on which the program may be printed, because the program may be obtained electronically by, for example, optically scanning the paper or other medium, followed by editing, interpreting or processing in other suitable ways if necessary, and then be stored in the computer memory.

It should be understood that various parts of the present application may be implemented in hardware, software, firmware or a combination thereof. In the above embodiments, a plurality of steps or methods may be realized by software or firmware stored in a memory and executed by an appropriate instruction execution system. For example, if it is implemented by hardware, as in another embodiment, it may be implemented by any one of the following technologies known in the art or their combination: discrete logic circuits with logic gates for implementing logic functions on data signals, application specific integrated circuits with appropriate combinational logic gates, programmable gate arrays (PGA), field programmable gate arrays (FPGA), etc.

Those skilled in the art may understand that all or part of the steps carried by the methods of the above embodiments may be completed by instructing related hardware through a program, which may be stored in a computer-readable storage medium, and the program, when executed, includes one or a combination of the steps of the method embodiments.

In addition, each functional unit in each embodiment of the present invention may be integrated in one processing module, or each unit may exist physically alone, or two or more units may be integrated in one module. The above integrated modules may be realized in the form of hardware or software functional modules. The integrated module may also be stored in a computer-readable storage medium if it is implemented in the form of software functional modules and sold or used as an independent product.

The storage medium mentioned above may be a read-only memory, a magnetic disk or an optical disk, etc. Although the embodiments of the present invention have been shown and described above, it may be understood that the above embodiments are exemplary and cannot be understood as limitations to the present invention, and those skilled in the art may make changes, modifications, substitutions and variations to the above embodiments within the scope of the present invention.

## Claims

1. A display control method, comprising:
obtaining (101, 201) a content to be displayed in an external screen of an electronic device in a folded state, wherein a display area of the external screen is divided into a first display area and a second display area; and
displaying (102) the content to be displayed through the first display area and the second display area, wherein a display window of the first display area is larger than a display window of the second display area, and a camera is arranged in the second display area.

2. The method according to claim 1, wherein the content to be displayed comprises an application program and an interactive interface component, and displaying (102) the content to be displayed through the first display area and the second display area comprises:
filling (202) the first display area and the second display area with a background element corresponding to the application program; and
displaying (203) a page of the application program in the first display area filled with the background element, and displaying the interactive interface component in the second display area filled with the background element.

3. The method according to claim 2, wherein the interactive interface component is located at a side of the camera in the second display area, and the camera and the interactive interface component are arranged along a length direction of the electronic device.

4. The method according to claim 2 or 3, wherein the application program is a first application program, and the interactive interface component is an interactive control of the first application program.

5. The method according to claim 2 or 3, wherein the application program is a second application program, and the interactive interface component is a target widget of a plurality of widgets set by a system; and the plurality of widgets corresponds to a plurality of application programs different from the second application program.

6. The method according to claim 5, further comprising:
in response to detecting a first target operation of a user on the target widget, taking (804) a next widget to be displayed as the target widget according to a display order of the plurality of widgets set by the system; and
displaying (805) the target widget in the second display area.

7. The method according to claim 5 or 6, further comprising:
in response to obtaining service information of a target application program, generating (806) a focus card of the service information; and
displaying (806) the focus card while covering the target widget, wherein a size of the focus card is greater than or equal to a size of the target widget.

8. The method according to claim 7, further comprising:
removing (807) the focus card from the second display area and displaying information of the target application program in a status bar of the first display area, in response to detecting a second target operation of a user on the focus card, or a display duration of the focus card reaches a set duration; and
in response to detecting that the target application program has updated service information, displaying (808) a focus card of the updated service information while covering the target widget.

9. The method according to any one of claims 1-8, wherein displaying (102) the content to be displayed through the first display area and the second display area comprises:
in response to that the content to be displayed comprises a third application program, displaying a page of the third application program in the first display area and the second display area together.

10. The method according to claim 9, wherein displaying the page of the third application program in the first display area and the second display area together in response to the content to be displayed comprises the third application program comprises:
querying whether the third application program has a corresponding animation effect; and
in response to that the third application program has the corresponding animation effect, displaying the page of the third application program in the first display area and the second display area together, and displaying the animation effect in an overlapping manner in a display area adjacent to the camera in the second display area.

11. The method according to any one of claims 2-8, wherein the electronic device is in a first vertical screen direction, and the method further comprises:
in response to determining that the electronic device rotates from the first vertical screen direction to a second vertical screen direction, adjusting the interactive interface component displayed in the first display area and the page of the application program displayed in the second display area to match with the second vertical screen direction, wherein the first vertical screen direction and the second vertical screen direction are opposite; and
displaying the adjusted interactive interface component through the first display area, and displaying the adjusted page of the application program through the second display area.

12. The method according to any one of claims 5-8, wherein the electronic device is in a first vertical screen direction, and the method further comprises:
monitoring a third target operation on the target widget in response to that the electronic device rotates from the first vertical screen direction to a horizontal screen state; and
in response to monitoring the third target operation, deleting the target widget from the second display area, or converting the target widget into a display mode matching with the horizontal screen state to be displayed in the second display area.

13. The method according to any one of claims 1-12, wherein before obtaining the content to be displayed in the external screen of the electronic device in the folded state, the method further comprises:
in response to detecting that an inner screen of the electronic device is switched from an unfolded state to the folded state, determining the content to be displayed in the external screen according to a content displayed in the inner screen of the electronic device.

14. An electronic device (900), comprising a memory (904), a processor (920) and a computer program stored in the memory (904) and executable on the processor (920), wherein when the processor (920) executes the program, a method according to any one of claims 1-13 is realized.

15. A non-transitory computer-readable storage medium, on which a computer program is stored, wherein the computer program, when executed by a processor, realizes a method according to any one of claims 1-13.
